# EUROPÄISCHE PATENTSCHRIFT

(11) **EP 4 109 047 B1**
(45) Veröffentlichungstag und Bekanntmachung des Hinweises auf die Patenterteilung: **26.02.2025**
(21) Anmeldenummer: 21180526.2
(22) Anmeldetag: 21.06.2021
(51) Int. Cl.: G01D 5/244

(54) **MITNEHMER FÜR EINE POSITIONSMESSEINRICHTUNG**
DRIVER FOR POSITION MEASUREMENT
DISPOSITIF ENTRAÎNEUR POUR UN DISPOSITIF DE MESURE DE LA POSITION

(43) Veröffentlichungstag der Anmeldung: 28.12.2022
(73) Patentinhaber: Dr. Johannes Heidenhain GmbH, 83301 Traunreut (DE)
(72) Erfinder: RÖTZER, Martin, 83278 Traunstein (DE); NUTZINGER, Tarek, 83377 Vachendorf (DE); SCHLICKSBIER, Thilo, 83278 Traunstein (DE)

(56) Entgegenhaltungen:
- EP-A2- 2 634 539
- WO-A2-2008/157114
- DE-A1- 10 018 269
- DE-U1- 202006 010 305
- US-A- 4 687 928

## Beschreibung

### GEBIET DER TECHNIK

Die vorliegende Erfindung betrifft einen Mitnehmer für eine Positionsmesseinrichtung nach dem Oberbegriff des Anspruchs 1.

### STAND DER TECHNIK

EP 2 781 890 A1 offenbart eine Positionsmesseinrichtung, insbesondere eine Längenmesseinrichtung. Die Positionsmesseinrichtung umfasst einen Maßstab in einem Gehäuse, welches denselben aufnimmt, und eine Abtasteinheit, welche den Maßstab abtastet. Die Abtasteinheit ist mit einem Mitnehmer gekoppelt. Der Mitnehmer ist an einem zu messenden Objekt befestigbar.

Eine weitere Längenmesseinrichtung mit einem Mitnehmer ist aus DE 27 29 708 B1 bekannt.

DE 100 18 269 A1 offenbart einen Mitnehmer nach dem Oberbegriff des Anspruchs 1.

DE 20 2006 010305 U1 offenbart eine Positionsmesseinrichtung mit einem Mitnehmer mit einer Nut zur Aufnahme eines Kabels.

### ZUSAMMENFASSUNG DER ERFINDUNG

Der vorliegenden Erfindung liegt die Aufgabe zugrunde, einen Mitnehmer für eine Positionsmesseinrichtung anzugeben, wobei der Mitnehmer einen flexiblen und an ein Kabel einer Abtasteinheit der Positionsmesseinrichtung angepassten Aufbau hat.

Diese Aufgabe wird erfindungsgemäß durch den Mitnehmer für eine Positionsmesseinrichtung mit den Merkmalen des Anspruchs 1 gelöst.

Der erfindungsgemäße Mitnehmer ist dazu ausgebildet, eine Abtasteinheit der Positionsmesseinrichtung zu tragen. Der Mitnehmer hat eine Öffnung zur Aufnahme und Hindurchführung eines Kabels der Abtasteinheit. Die Öffnung erstreckt sich durch zumindest einen Teil des Mitnehmers hindurch. Der Mitnehmer hat eine in einem Längsabschnitt des Mitnehmers vorgesehene Aussparung zum seitlichen Einlegen des Kabels in den Mitnehmer. Der Mitnehmer weist ein mit der Aussparung korrespondierendes Verschlusselement auf. Das Verschlusselement ist mit einem zum Verschlusselement komplementären Teil des Mitnehmers lösbar verbunden. Der Mitnehmer hat eine erste Innenkontur. Das Verschlusselement hat eine der ersten Innenkontur gegenüberliegende zweite Innenkontur. Die erste Innenkontur und die zweite Innenkontur erstrecken sich jeweils durch den Längsabschnitt des Mitnehmers hindurch. Durch die erste Innenkontur und die zweite Innenkontur wird die Öffnung zur Aufnahme und Hindurchführung des Kabels gebildet.

Der Mitnehmer ist insbesondere derart ausgebildet, dass das Kabel durch zumindest einen Teil des Mitnehmers (z. B. schwertförmiges Mittelstück) hindurch geführt werden kann. Somit umfasst der Mitnehmer eine Kabeldurchführung für das Kabel der Abtasteinheit.

Der Mitnehmer weist vorzugsweise ein Adapterstück zur Verbindung der Abtasteinheit mit dem Mitnehmer auf. Durch das Adapterstück wird eine Einstellung bzw. Ausrichtung der Abtasteinheit relativ zu einem abzutastenden Maßstab ermöglicht. Diese Einstellung bzw. Ausrichtung kann in mehreren Freiheitsgraden (z. B. Abstand/Parallelität, Moiré-Winkel und/oder Höhe) erfolgen.

Es ist vorteilhaft, wenn das Verschlusselement dazu ausgebildet ist, im verbundenen Zustand eine Zugentlastung für das Kabel zu bewirken.

Vorzugsweise hat die Öffnung einen runden, quadratischen oder rechteckigen Querschnitt.

Eine Positionsmesseinrichtung mit einem erfindungsgemäßen Mitnehmer ist in Anspruch 13 angegeben. Die Positionsmesseinrichtung ist insbesondere eine gekapselte Längenmesseinrichtung mit einem einteiligen oder zweiteiligen Gehäuse.

Durch die Erfindung wird eine Anpassung des Mitnehmers an das Kabel (z. B. Geometrie, Form) der Abtasteinheit erreicht. Hierzu ist insbesondere eine Kabeldurchführung in Form einer Öffnung im Mitnehmer vorgesehen. Der Mitnehmer eignet sich in vorteilhafter Weise zur passgenauen Aufnahme und Hindurchführung des Kabels durch denselben. Im Gegensatz zu einem herkömmlichen Aufbau, bei dem typischerweise ein Flexleiter als Träger einer Verbindungsleitung verwendet wird, ermöglicht es die Erfindung, insbesondere auch bei größeren Abmessungen (d. h. größerer Kabeldurchmesser bzw. größere Kabelgröße) Anwendung zu finden. Dies ermöglicht wiederum einen flexiblen Aufbau des Mitnehmers. Durch die Erfindung wird zudem eine Verbindung des Kabels der Abtasteinheit mit einer vom Mitnehmer separat bereitgestellten Steckverbindung ermöglicht.

Vorteilhafte Ausbildungen der Erfindung entnimmt man den abhängigen Ansprüchen.

Weitere Einzelheiten und Vorteile der vorliegenden Erfindung werden anhand der nachfolgenden Beschreibung von möglichen Ausführungsbeispielen der Erfindung in Verbindung mit den Figuren erläutert.

### KURZE BESCHREIBUNG DER ZEICHNUNGEN

Es zeigen
- Figur 1: eine perspektivische Ansicht einer beispielhaften Positionsmesseinrichtung;
- Figur 2: eine Querschnittsansicht der Positionsmesseinrichtung nach Figur 1;
- Figur 3a: eine perspektivische Ansicht einer Endseite der Positionsmesseinrichtung nach Figur 1;
- Figur 3b: eine perspektivische Explosionsansicht der Endseite der Positionsmesseinrichtung nach Figur 1;
- Figur 4: eine Querschnittsansicht der Endseite der Positionsmesseinrichtung nach Figur 1 im Bereich einer zweiten (oberen) Dichtschnur;
- Figur 5a: eine perspektivische Ansicht eines Mitnehmers der Positionsmesseinrichtung nach Figur 1;
- Figur 5b: eine perspektivische Ansicht des Mitnehmers nach Figur 5a mit einem von einem komplementären Teil des Mitnehmers gelösten Verschlusselement;
- Figur 6a: eine Draufsicht auf den Mitnehmer nach Figur 5a zur Veranschaulichung eines L-förmig ausgebildeten Abschnitts;
- Figur 6b: eine Querschnittsansicht des Mitnehmers nach Figur 5a im Mittenbereich des Mitnehmers;
- Figur 7: eine perspektivische Ansicht des Verschlusselements nach Figur 5b; und
- Figur 8: eine perspektivische Explosionsansicht der Positionsmesseinrichtung nach Figur 1.

### BESCHREIBUNG DER AUSFÜHRUNGSFORMEN

Gleiche Elemente oder funktionell gleiche Elemente sind in den Figuren mit gleichen Bezugszeichen versehen.

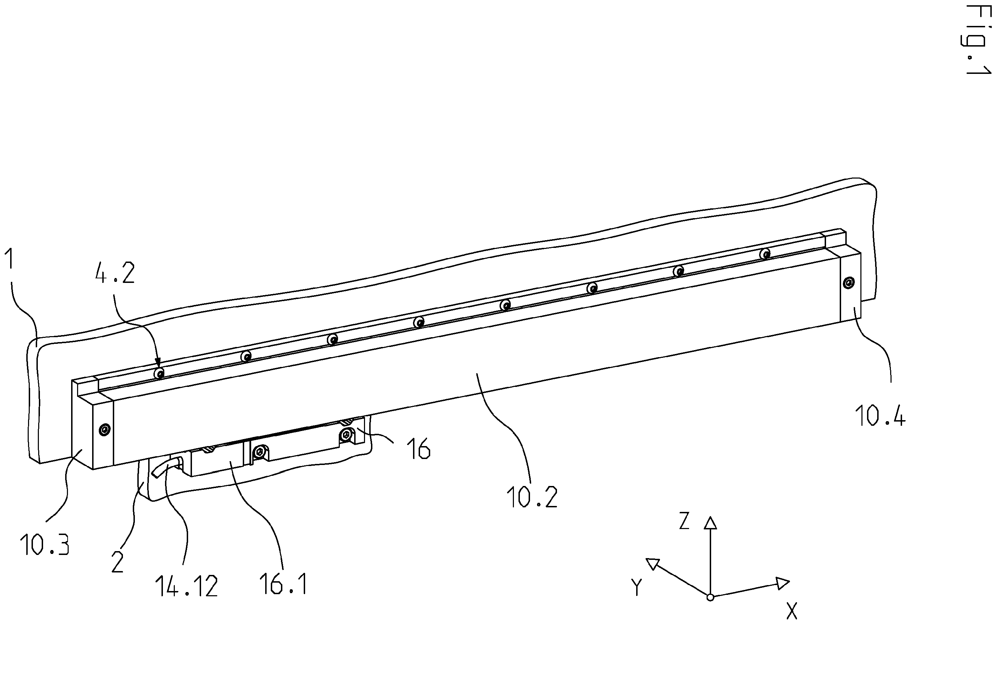

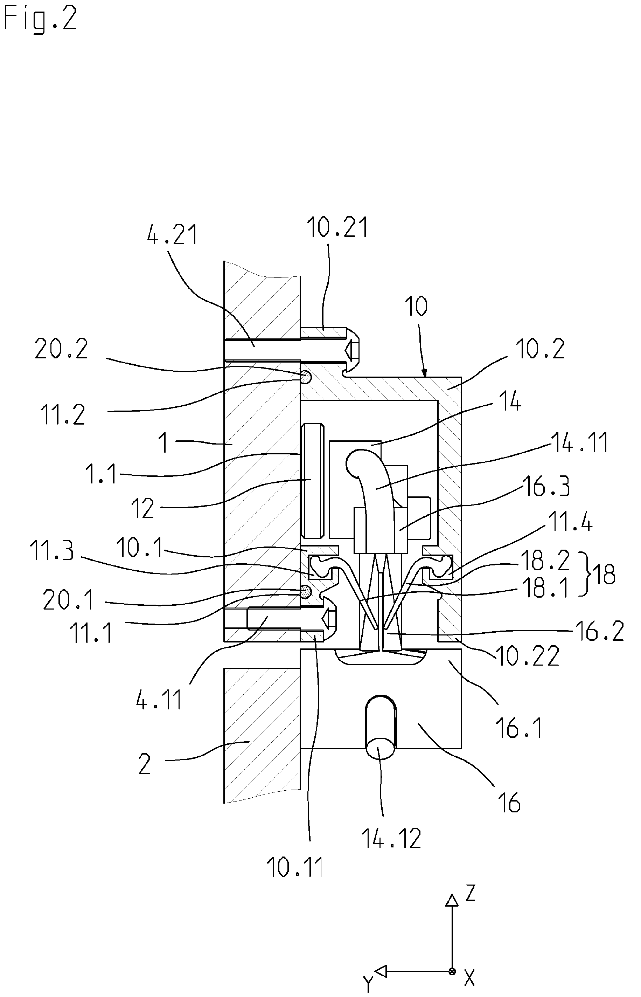

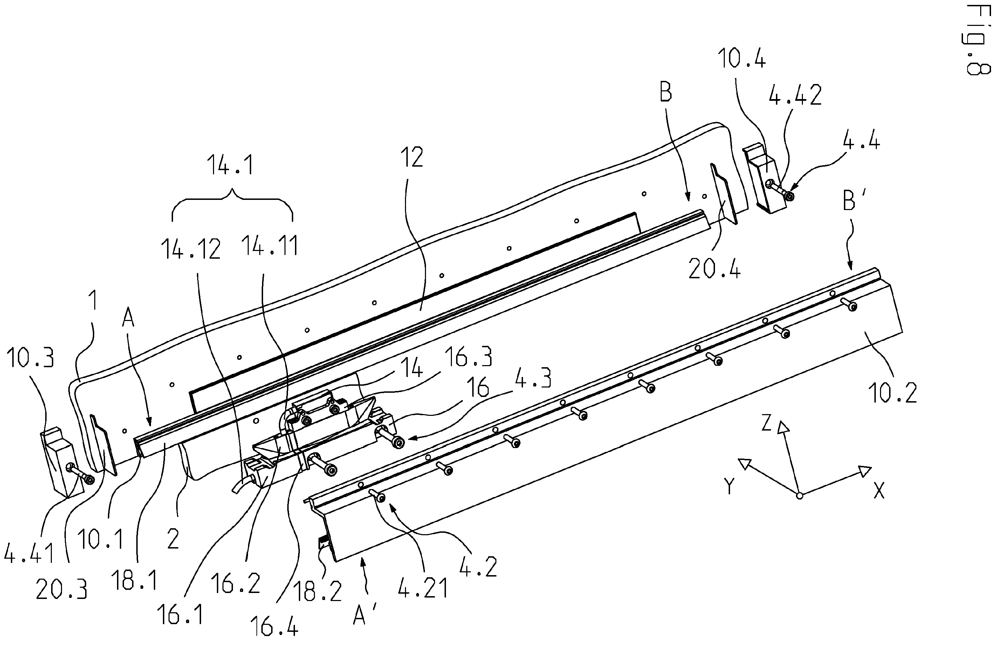

Ein Ausführungsbeispiel wird nachfolgend anhand der Figuren 1 bis 8 erläutert. Die Positionsmesseinrichtung gemäß dem Ausführungsbeispiel umfasst einen Grundkörper 1 (z. B. Maschinenbett oder Grundkörper der Maschine), ein sich in einer Längsrichtung X erstreckendes und mit dem Grundkörper 1 verbundenes erstes Gehäuseteil 10.1 und ein sich in Längsrichtung X erstreckendes und mit dem Grundkörper 1 verbundenes zweites Gehäuseteil 10.2 (vgl. Figur 8). Durch zumindest das erste Gehäuseteil 10.1 und das zweite Gehäuseteil 10.2 wird ein Hohlprofil 10 gebildet (vgl. Figur 2). Die Positionsmesseinrichtung weist einen innerhalb des Hohlprofils 10 angeordneten Maßstab 12 und eine dem Maßstab 12 gegenüberliegende Abtasteinheit 14 zur Abtastung des Maßstabs 12 auf. Der Grundkörper 1 und der Maßstab 12 sind unmittelbar miteinander verbunden.

Wie in Figur 2 gezeigt, grenzt der Maßstab 12 an eine Anbaufläche 1.1 des Grundkörpers 1 an. Die Anbaufläche 1.1 ist eine dem Maßstab 12 zugewandte, seitliche Oberfläche des Grundkörpers 1.

Die Positionsmesseinrichtung ist insbesondere eine Längenmesseinrichtung. Hierzu sind der Maßstab 12 und die Abtasteinheit 14 in Längsrichtung X (d. h. Messrichtung) relativ zueinander bewegbar. Die Abtasteinheit 14 tastet bei der Positionsmessung eine Messteilung des Maßstabs 12 ab und bildet daraus Positionsmesswerte. Die Messteilung ist in den Figuren nicht dargestellt.

Der Grundkörper 1 und das erste Gehäuseteil 10.1 sind über Befestigungsschrauben unmittelbar miteinander verbunden. In Figur 2 ist eine dieser Befestigungsschrauben (Befestigungsschraube 4.11) sichtbar. Ferner sind der Grundkörper 1 und das zweite Gehäuseteil 10.2 über Befestigungsschrauben 4.2 unmittelbar miteinander verbunden. In Figur 2 ist eine dieser Befestigungsschrauben 4.2 (Befestigungsschraube 4.21) sichtbar. Die Befestigungsschraube 4.21 ist der Befestigungsschraube 4.11 zugeordnet, d. h. die Befestigungsschrauben 4.11, 4.21 sind in Z-Richtung übereinanderliegend angeordnet. Die Z-Richtung verläuft senkrecht zur Längsrichtung X und parallel zur Anbaufläche 1.1 des Grundkörpers 1. Im Folgenden wird die Z-Richtung auch als "erste Richtung" bezeichnet.

Unmittelbar miteinander verbunden bedeutet, dass die jeweiligen Elemente direkt, d. h. nicht über ein oder mehrere Zwischenelemente miteinander verbunden sind.

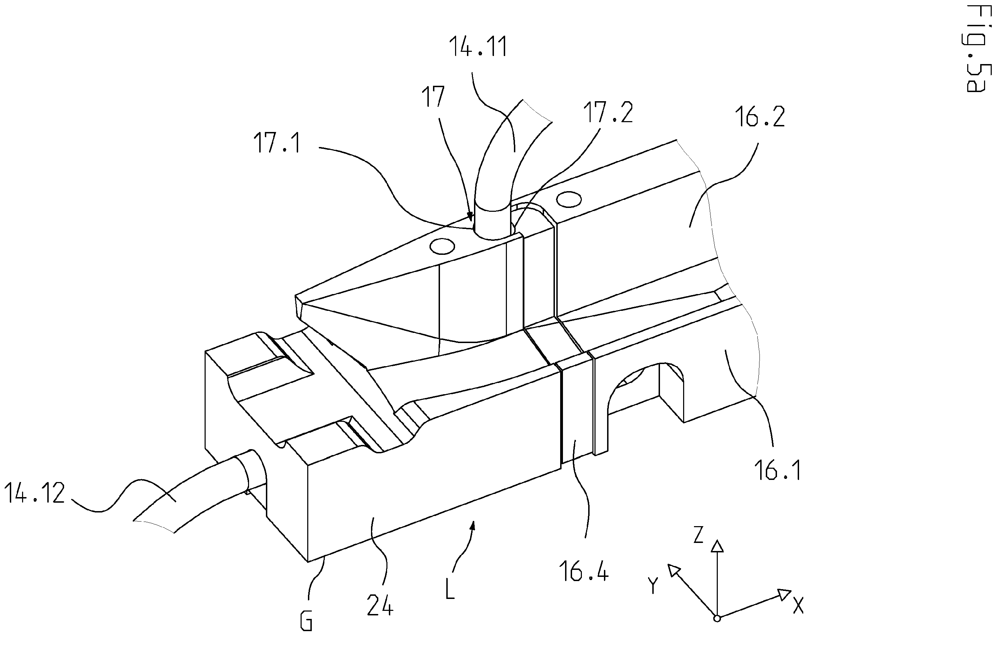

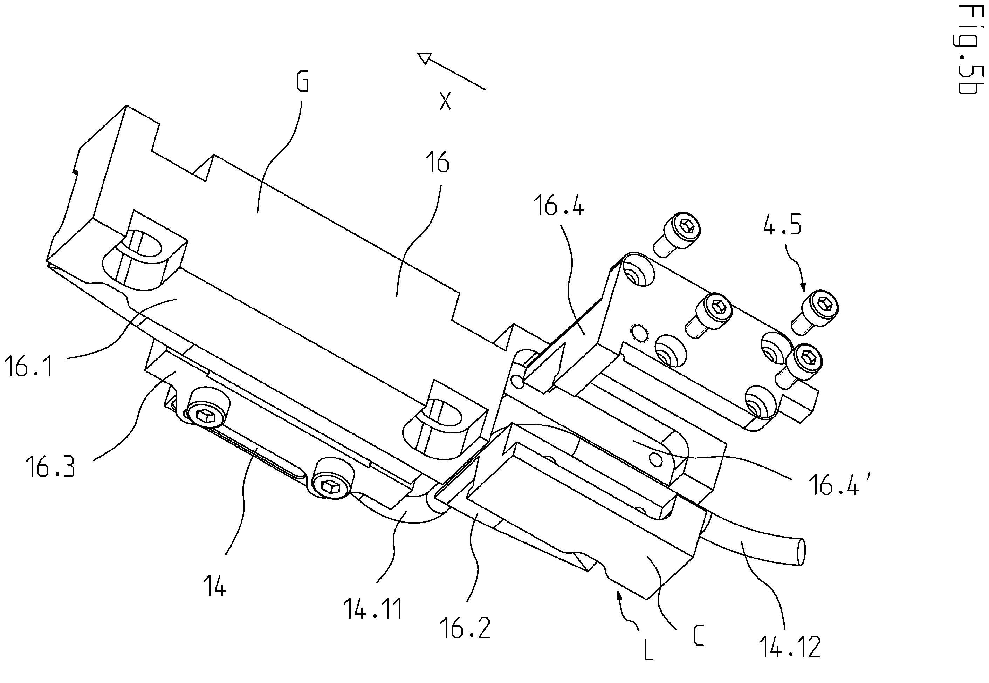

Mit Bezug auf Figur 2 wird das Hohlprofil 10 in seiner Gesamtheit durch den Grundkörper 1, das erste Gehäuseteil 10.1 und das zweite Gehäuseteil 10.2 gebildet. In Längsrichtung X verlaufend weist die Positionsmesseinrichtung eine erste Dichtlippe 18.1 und eine zweite Dichtlippe 18.2 (im Folgenden Dichtlippen 18) auf. Die Dichtlippen 18 sind am unteren Ende des Hohlprofils 10 angeordnet. Durch die Dichtlippen 18 greift ein Mitnehmer 16, der die Abtasteinheit 14 trägt. Nähere Einzelheiten zum Mitnehmer 16 werden später noch im Zusammenhang mit Figur 5 bis 7 (bzw. 8) beschrieben.

Wie in Figur 2 gezeigt, liegen sich die Dichtlippen 18 in Y-Richtung einander gegenüber. Die Y-Richtung verläuft senkrecht zur Anbaufläche 1.1 des Grundkörpers 1. Im Folgenden wird die Y-Richtung auch als "zweite Richtung" bezeichnet.

Mit Bezug auf Figur 2 hat das erste Gehäuseteil 10.1 einen ersten Abschnitt 10.11 zur Befestigung des ersten Gehäuseteils 10.1 am Grundkörper 1. Ferner hat das zweite Gehäuseteil 10.2 einen dem Grundkörper 1 zugewandten zweiten Abschnitt 10.21 zur Befestigung des zweiten Gehäuseteils 10.2 am Grundkörper 1. Der erste Abschnitt 10.11 ist auf einer ersten (unteren) Seite des Maßstabs 12 angeordnet. Der zweite Abschnitt 10.21 ist auf einer der ersten Seite gegenüberliegenden zweiten (oberen) Seite des Maßstabs 12 angeordnet. Der erste Abschnitt 10.11 und der zweite Abschnitt 10.21 sind in der ersten Richtung (d. h. Z-Richtung) einander gegenüberliegend angeordnet. Wie in Figur 2 gezeigt, erstreckt sich durch den ersten Abschnitt 10.11 die Befestigungsschraube 4.11. Ferner erstreckt sich durch den zweiten Abschnitt 10.21 die Befestigungsschraube 4.21. Das durch das erste und zweite Gehäuseteil 10.1, 10.2 gebildete zweiteilige Gehäuse erstreckt sich somit beidseitig des Maßstabs 12 bis auf den Grundkörper 1 und umgibt den Maßstab 12 auf der oberen und unteren Seite.

Die Positionsmesseinrichtung weist ein erstes bis viertes Dichtelement 20.1 bis 20.4 auf (vgl. Figur 2 und 8). Wie in Figur 2 gezeigt, hat das erste Gehäuseteil 10.1 eine an den Grundkörper 1 angrenzende erste Ausnehmung 11.1 zur Aufnahme des ersten Dichtelements 20.1. Ferner hat das zweite Gehäuseteil 10.2 eine an den Grundkörper 1 angrenzende zweite Ausnehmung 11.2 zur Aufnahme des zweiten Dichtelements 20.2. Die erste Ausnehmung 11.1 und die zweite Ausnehmung 11.2 erstrecken sich jeweils in Längsrichtung X.

Beispielsweise ist das erste Dichtelement 20.1 eine erste Dichtschnur. Ferner ist das zweite Dichtelement 20.2 beispielsweise eine zweite Dichtschnur. Das erste Dichtelement 20.1 und das zweite Dichtelement 20.2 erstrecken sich jeweils in Längsrichtung X. Das erste und zweite Dichtelement 20.1, 20.2 sind von der ersten und zweiten Ausnehmung 11.1, 11.2 jeweils über ihre gesamte Länge aufgenommen.

Durch das erste und zweite Dichtelement 20.1, 20.2 kann das durch das erste und zweite Gehäuseteil 10.1, 10.2 gebildete zweiteilige Gehäuse seitlich, d. h. in Y-Richtung, gegen den Grundkörper 1 abgedichtet werden. Dies ist in Figur 2 veranschaulicht.

Die Positionsmesseinrichtung weist ein an einem ersten Endabschnitt A, A' des ersten und zweiten Gehäuseteils 10.1, 10.2 angeordnetes erstes Deckelelement 10.3 und ein an einem dem ersten Endabschnitt A, A' gegenüberliegenden zweiten Endabschnitt B, B' des ersten und zweiten Gehäuseteils 10.1, 10.2 angeordnetes zweites Deckelelement 10.4 auf (vgl. Figur 8). Wie in Figur 8 zu erkennen ist, ist das dritte Dichtelement 20.3 zwischen dem ersten Endabschnitt A, A' und dem ersten Deckelelement 10.3 angeordnet. Ferner ist das vierte Dichtelement 20.4 zwischen dem zweiten Endabschnitt B, B' und dem zweiten Deckelelement 10.4 angeordnet. Insbesondere sind das dritte Dichtelement 20.3 und das vierte Dichtelement 20.4 jeweils plattenförmig ausgebildet. Des Weiteren ist in Figur 8 zu erkennen, dass das erste und zweite Deckelelement 10.3, 10.4 jeweils über eine Befestigungsschraube 4.41, 4.42 (Befestigungsschrauben 4.4) mit dem Grundkörper 1 verbindbar sind.

Das dritte Dichtelement 20.3 und das vierte Dichtelement 20.4 können jeweils auch als (kompressible) Dichtplatte bezeichnet werden.

Das erste und zweite Deckelelement 10.3, 10.4 stellen jeweils ein drittes bzw. viertes Gehäuseteil (endseitige Gehäuseteile) dar. Dies ist in Figur 1 veranschaulicht. Durch das dritte und vierte Dichtelement 20.3, 20.4 kann das durch das erste bis vierte Gehäuseteil 10.1 bis 10.4 gebildete Gehäuse jeweils endseitig, d. h. am ersten Endabschnitt A, A' bzw. am zweiten Endabschnitt B, B', abgedichtet werden.

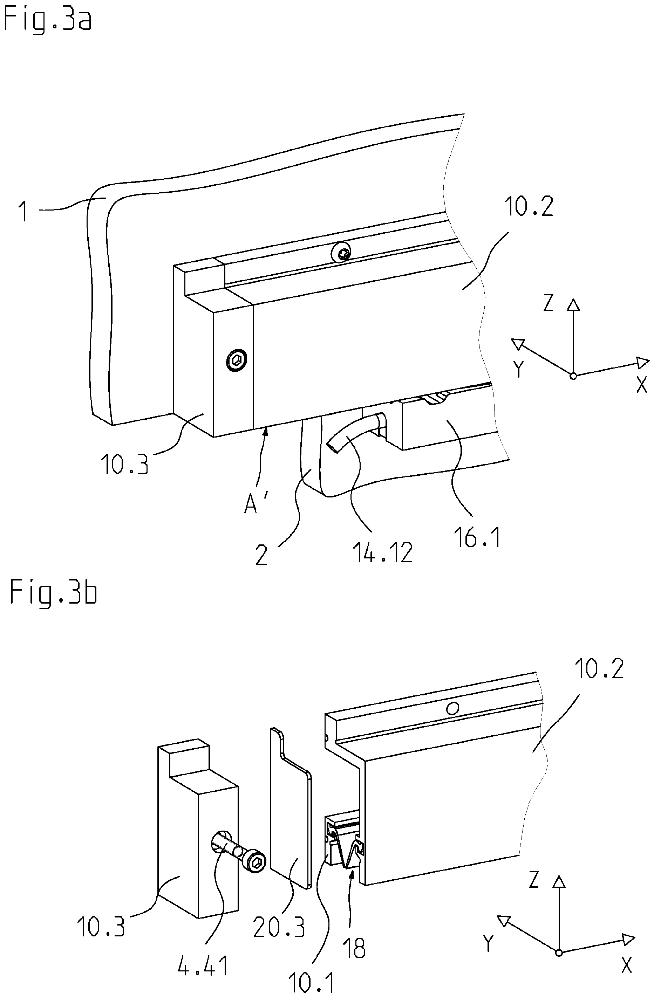

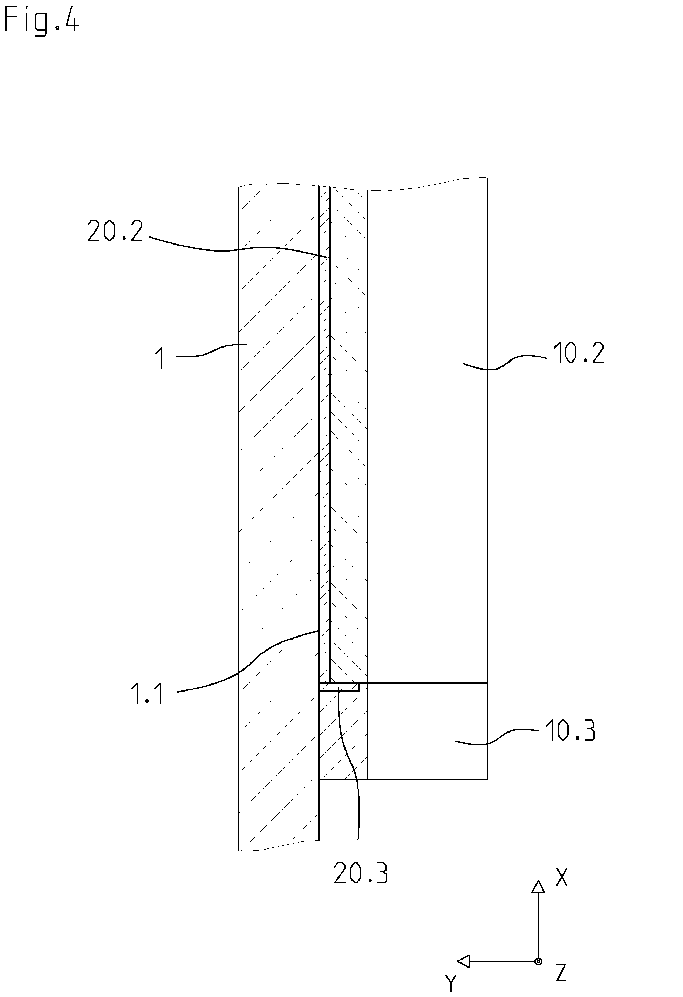

Figur 3a zeigt eine Endseite der Positionsmesseinrichtung nach Figur 1. In Figur 3a sind insbesondere der erste Endabschnitt A' des zweiten Gehäuseteils 10.2 und das erste Deckelelement 10.3 (drittes Gehäuseteil) gezeigt. Figur 3b zeigt das zwischen dem zweiten und dritten Gehäuseteil 10.2, 10.3 angeordnete dritte Dichtelement 20.3. In der Querschnittsansicht von Figur 4 sind das zweite und dritte Dichtelement 20.2, 20.3 zu erkennen. Wie in Figur 4 gezeigt, sind das zweite und dritte Dichtelement 20.2, 20.3 jeweils bündig mit der Anbaufläche 1.1 des Grundkörpers 1 angeordnet. Dadurch wird die seitliche Abdichtung des Gehäuses zum Grundkörper 1 hin erreicht. In Figur 4 ist dies für die in Figur 3a gezeigte Endseite veranschaulicht. Für die gegenüberliegende Endseite der Positionsmesseinrichtung ist die Situation analog.

Mit Bezug auf Figur 2 hat das erste Gehäuseteil 10.1 eine dritte Ausnehmung 11.3 zur Aufnahme der ersten Dichtlippe 18.1. Ferner hat das zweite Gehäuseteil 10.2 einen dem Grundkörper 1 abgewandten dritten Abschnitt 10.22. Das erste Gehäuseteil 10.1 und der dritte Abschnitt 10.22 sind in der zweiten Richtung (Y-Richtung) einander gegenüberliegend angeordnet. Wie in Figur 2 gezeigt, hat das zweite Gehäuseteil 10.2 eine in dem dritten Abschnitt 10.22 angeordnete vierte Ausnehmung 11.4 zur Aufnahme der zweiten Dichtlippe 18.2. Die dritte Ausnehmung 11.3 und die vierte Ausnehmung 11.4 erstrecken sich jeweils in Längsrichtung X. Die erste und zweite Dichtlippe 18.1, 18.2 sind von der dritten und vierten Ausnehmung 11.3, 11.4 jeweils über ihre gesamte Länge aufgenommen. Die Dichtlippen 18 dienen zur Abdichtung des durch den Grundkörper 1, das erste Gehäuseteil 10.1 und das zweite Gehäuseteil 10.2 gebildeten Hohlprofils 10 nach unten hin, d. h. in (negativer) Z-Richtung (vgl. Figur 2).

Durch das erste bis vierte Dichtelement 20.1 bis 20.4 in Verbindung mit den Dichtlippen 18 wird eine im Wesentlichen vollständige Abdichtung der Positionsmesseinrichtung erreicht. Insgesamt ergibt sich somit ein gegen ein Fluid (z. B. Kühlschmiermittel) gedichtetes System.

Die Positionsmesseinrichtung stellt insbesondere ein gekapseltes, ungeführtes System dar. Dabei ist die Abtasteinheit 14 relativ zum Hohlprofil 10 in Längsrichtung X, insbesondere unabhängig vom Maßstab 12 und unabhängig vom ersten und zweiten Gehäuseteil 10.1, 10.2 bewegbar (vgl. Figur 2). Wie in Figur 2 gezeigt, hat die Abtasteinheit 14 keine gemeinsame Führungsfläche mit dem Maßstab 12 oder mit dem ersten und zweiten Gehäuseteil 10.1, 10.2.

In den Figuren 5 bis 7 (bzw. 8) werden nähere Einzelheiten des Mitnehmers 16 erläutert. Gemäß Figur 8 hat der Mitnehmer 16 einen Montagebereich 16.1. Der Montagebereich 16.1 dient zur Verbindung des Mitnehmers 16 mit einem zu messenden Objekt 2. Wie in Figur 8 gezeigt, ist der Mitnehmer 16 über Befestigungsschrauben 4.3 mit dem zu messenden Objekt 2 verbindbar. Ferner weist der Mitnehmer 16 ein schwertförmiges Mittelstück 16.2, ein Adapterstück 16.3 und ein Verschlusselement 16.4 auf. Das Adapterstück 16.3 dient zur Verbindung der Abtasteinheit 14 mit dem schwertförmigen Mittelstück 16.2. Durch das Adapterstück 16.3 kann eine Einstellung der Abtasteinheit 14 relativ zum Maßstab 12 in mehreren Freiheitsgraden (z. B. Freiheitsgrade Y, RY, Z) vorgenommen werden. Durch das schwertförmige Mittelstück 16.2 werden das Adapterstück 16.3 und der Montagebereich 16.1 miteinander verbunden.

Wie in Figur 2 gezeigt, erstreckt sich das schwertförmige Mittelstück 16.2 vom Inneren des Hohlprofils 10 durch die Dichtlippen 18 hindurch bis zum außerhalb des Hohlprofils 10 angeordneten Montagebereich 16.1. Die Abtasteinheit 14 umfasst ein Kabel 14.1 (vgl. Figur 8). Das Kabel 14.1 hat einen oberen Abschnitt 14.11 und einen unteren Abschnitt 14.12. Der obere Abschnitt 14.11 erstreckt sich von der Abtasteinheit 14 bis zum schwertförmigen Mittelstück 16.2. Der untere Abschnitt 14.12 ist in Längsrichtung (X-Richtung) aus dem Montagebereich 16.1 herausgeführt (vgl. Figur 2 und 8).

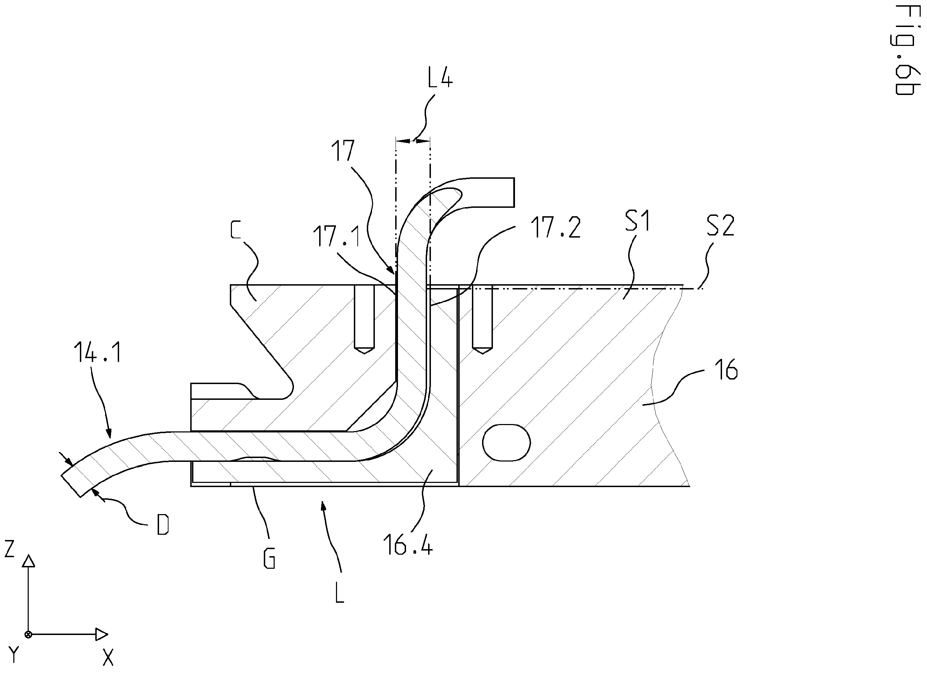

Der Mitnehmer 16 dient insbesondere dazu, die Abtasteinheit 14 zu tragen. Mit Bezug auf Figur 5a hat der Mitnehmer 16 eine Öffnung 17 zur Aufnahme und Hindurchführung des Kabels 14.1. Die Öffnung 17 erstreckt sich durch zumindest einen Teil des Mitnehmers 16 hindurch (vgl. Figur 6b). Dadurch kann das Kabel 14.1 durch zumindest einen Teil des Mitnehmers 16, insbesondere das schwertförmige Mittelstück 16.2, hindurch geführt werden.

In Bezug auf die Geometrie des Mitnehmers 16 entspricht die Längsrichtung (X-Richtung) einer Richtung, die parallel zu einer Längsausdehnung des Mitnehmers 16 verläuft. Ferner entspricht die erste Richtung (Z-Richtung) einer Richtung, die senkrecht zu einer Grundfläche G des Mitnehmers 16 verläuft. Darüber hinaus entspricht die zweite Richtung (Y-Richtung) einer Richtung, die senkrecht zur Längsausdehnung des Mitnehmers 16 und parallel zur Grundfläche G des Mitnehmers 16 verläuft.

Mit Bezug auf Figur 5a und 6b ist der Mitnehmer 16 derart ausgebildet, dass das Kabel 14.1 in der ersten Richtung (Z-Richtung) durch das schwertförmige Mittelstück 16.2 hindurch geführt werden kann. Ferner ist der Mitnehmer 16 derart ausgebildet, dass das Kabel 14.1 in Längsrichtung (X-Richtung) in einem Längsabschnitt L des Mitnehmers 16 durch den Montagebereich 16.1 hindurch geführt werden kann.

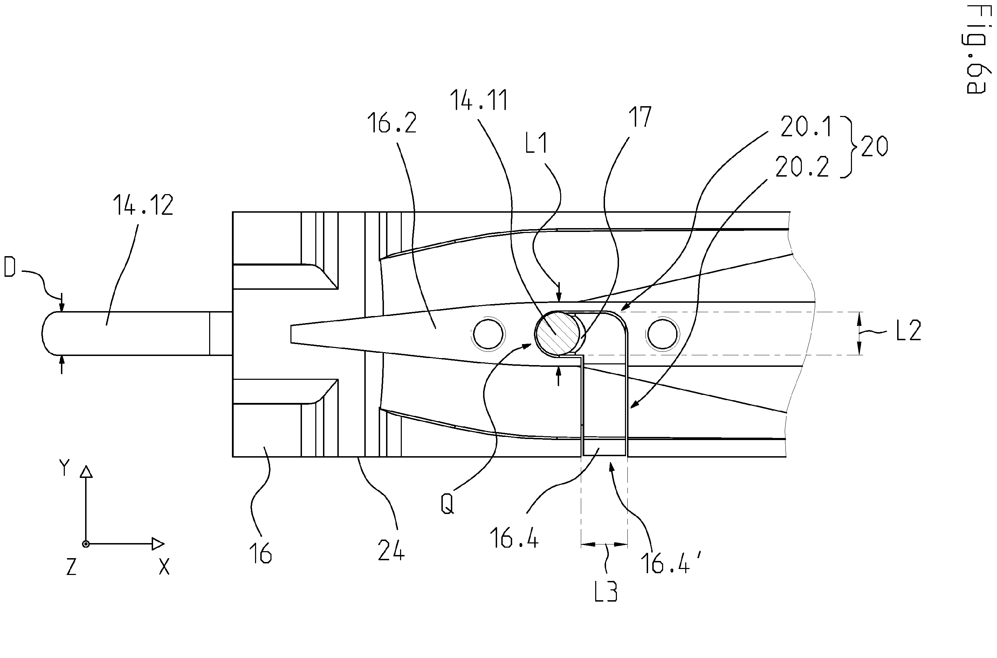

Mit Bezug auf Figur 6a hat das schwertförmige Mittelstück 16.2 eine erste Ausdehnung L1 in der zweiten Richtung (Y-Richtung). Beispielsweise liegt die erste Ausdehnung L1 in einem Bereich vom 1,0-fachen bis zum 1,5-fachen oder im Bereich vom 1,0-fachen bis zum 1,25-fachen eines Durchmessers D des Kabels 14.1. Somit ist die erste Ausdehnung L1 größer, insbesondere geringfügig größer, oder gleich dem Durchmesser D des Kabels 14.1. Die erste Ausdehnung L1 (d. h. Breite des schwertförmigen Mittelstücks 16.2) ist also derart angepasst, dass das Kabel 14.1 in seinem Querschnitt vom schwertförmigen Mittelstück 16.2 aufgenommen werden kann.

In Figur 5b ist gezeigt, dass der Mitnehmer 16 eine im Längsabschnitt L des Mitnehmers 16 vorgesehene Aussparung 16.4' zum seitlichen Einlegen des Kabels 14.1 in den Mitnehmer 16 hat. Mit Bezug auf Figur 6a weist die Aussparung 16.4' einen die Öffnung 17 umfassenden ersten Teilabschnitt 20.1 (Langloch) und einen an den ersten Teilabschnitt 20.1 angrenzenden zweiten Teilabschnitt 20.2 auf. Durch den ersten Teilabschnitt 20.1 und den zweiten Teilabschnitt 20.2 wird ein in einer Draufsicht auf den Mitnehmer 16 L-förmig ausgebildeter Abschnitt 20 gebildet. Der erste Teilabschnitt 20.1 erstreckt sich in Längsrichtung (X-Richtung). Der zweite Teilabschnitt 20.2 erstreckt sich in der zweiten Richtung (Y-Richtung). Der erste Teilabschnitt 20.1 ist in einem Mittenbereich Q des Mitnehmers 16 angeordnet. Der zweite Teilabschnitt 20.2 erstreckt sich von einer seitlichen Oberfläche 24 des Mitnehmers 16 bis zum Mittenbereich Q des Mitnehmers 16.

Bezug nehmend auf Figur 6a hat der erste Teilabschnitt 20.1 eine zweite Ausdehnung L2 in der zweiten Richtung (Y-Richtung). Ferner hat der zweite Teilabschnitt 20.2 eine dritte Ausdehnung L3 in Längsrichtung (X-Richtung). Beispielsweise liegen die zweite Ausdehnung L2 und/oder die dritte Ausdehnung L3 jeweils in einem Bereich vom 1,0-fachen bis zum 1,25-fachen oder im Bereich vom 1,0-fachen bis zum 1,15-fachen des Durchmessers D des Kabels 14.1. Somit sind die zweite bzw. dritte Ausdehnung L2, L3 jeweils größer, insbesondere minimal größer, oder gleich dem Durchmesser D des Kabels 14.1. Dadurch wird über den L-förmig ausgebildeten Abschnitt 20 das seitliche Einlegen des Kabels 14.1 in den Mitnehmer 16 ermöglicht.

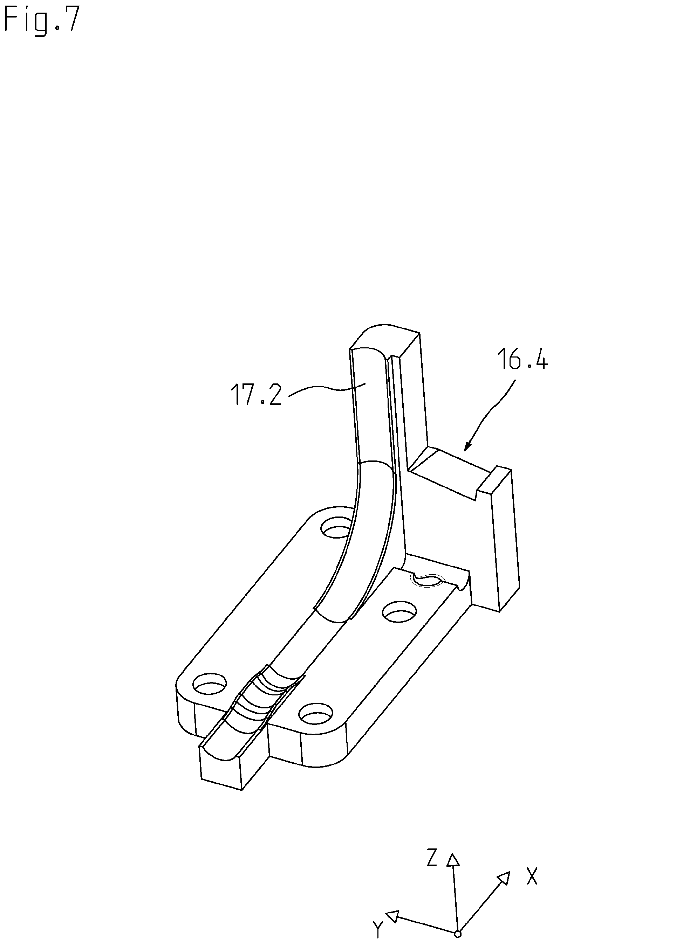

Mit Bezug auf Figur 5b weist der Mitnehmer 16 das mit der Aussparung 16.4' korrespondierende Verschlusselement 16.4 auf (vgl. auch Figur 7). Das Verschlusselement 16.4 ist mit einem zum Verschlusselement 16.4 komplementären Teil C des Mitnehmers 16 lösbar verbunden. Wie in Figur 6b gezeigt, hat der Mitnehmer 16 eine erste Innenkontur 17.1. Ferner hat das Verschlusselement 16.4 eine der ersten Innenkontur 17.1 gegenüberliegende zweite Innenkontur 17.2. Die erste Innenkontur 17.1 und die zweite Innenkontur 17.2 erstrecken sich jeweils durch den Längsabschnitt L des Mitnehmers 16 hindurch. Durch die erste Innenkontur 17.1 und die zweite Innenkontur 17.2 wird die Öffnung 17 zur Aufnahme und Hindurchführung des Kabels 14.1 gebildet.

In Figur 6b ist eine Querschnittsebene S1, die parallel zu einer Längsausdehnung des Mitnehmers 16 und senkrecht zur Grundfläche G des Mitnehmers 16 verläuft, gezeigt. Die Querschnittsebene S1 verläuft zudem durch das Kabel 14.1 (bzw. die Öffnung 17). Beispielsweise hat die durch die erste und zweite Innenkontur 17.1, 17.2 gebildete Öffnung 17 einen bogenförmigen oder abgewinkelten Verlauf. Gemäß Figur 6b hat dieser Verlauf eine im Wesentlichen L-Form.

In Figur 5b ist das Verschlusselement 16.4 im gelösten Zustand gezeigt. Das Verschlusselement 16.4 ist über Befestigungsschrauben 4.5 mit dem komplementären Teil C des Mitnehmers 16 verbindbar.

Bezug nehmend auf Figur 5b ist die Aussparung 16.4' derart ausgebildet, dass, wenn das Verschlusselement 16.4 vom komplementären Teil C gelöst ist (d. h. gelöster Zustand), das Kabel 14.1 in der zweiten Richtung (Y-Richtung) in den Mitnehmer 16 eingelegt werden kann.

Das Verschlusselement 16.4 hat insbesondere eine Doppelfunktion. Einerseits dient das Verschlusselement 16.4 dazu, die Aussparung 16.4' (bzw. den Mitnehmer 16) wieder zu verschließen, nachdem das Kabel 14.1 in den Mitnehmer 16 seitlich eingelegt wurde. Andererseits ist das Verschlusselement 16.4 dazu ausgebildet, im verbundenen Zustand eine Zugentlastung für das Kabel 14.1 zu bewirken. In Figur 7 ist die Innenwandung (zweite Innenkontur 17.2) des Verschlusselements 16.4 gut sichtbar.

Die Öffnung 17 hat beispielsweise einen runden, quadratischen oder rechteckigen Querschnitt. Wie in Figur 6b zu erkennen ist, hat die Öffnung 17 eine vierte Ausdehnung L4 in einer Ebene S2. Die Ebene S2 verläuft dabei parallel zur Grundfläche G des Mitnehmers 16. Beispielsweise liegt die vierte Ausdehnung L4 in einem Bereich vom 1,0-fachen bis zum 1,25-fachen oder im Bereich vom 1,0-fachen bis zum 1,15-fachen des Durchmessers D des Kabels 14.1. In vorteilhafter Weise ist der Querschnitt der Öffnung 17 an den Querschnitt des Kabels 14.1 angepasst (vgl. Figur 6a).

Vorzugsweise liegt die vierte Ausdehnung L4 in einem Bereich von 2 mm bis 20 mm oder im Bereich von 5 mm bis 15 mm.

Der Mitnehmer 16 ist vorzugsweise Teil der in den Figuren 1 bis 8 erläuterten Positionsmesseinrichtung (d. h. gekapselte Längenmesseinrichtung mit dem zweiteiligen Gehäuse). Alternativ kann der Mitnehmer 16 auch für den Einsatz in einer gekapselten Längenmesseinrichtung mit einem einteiligen Gehäuse geeignet sein.

Ein Teilesatz für die in den Figuren 1 bis 8 erläuterte Positionsmesseinrichtung umfasst das erste Gehäuseteil 10.1, das mit dem Grundkörper 1 verbindbar ist, und das zweite Gehäuseteil 10.2, das mit dem Grundkörper 1 verbindbar ist. Ferner weist der Teilesatz den Mitnehmer 16 zum Tragen der Abtasteinheit 14 auf.

Des Weiteren kann der Teilesatz die zusätzlichen Elemente 10.1 bis 10.4, 20.1 bis 20.4 und 18 aufweisen (gesamter Teilesatz). Durch Montage des Teilesatzes kann ein aus dem Maßstab 12 und der Abtasteinheit 14 bestehendes, bereits verfügbares offenes Längenmesssystem (d. h. System ohne Kapselung) gekapselt werden.

Die Erfindung hat insbesondere die folgenden Vorteile. Der Teilesatz eignet sich zur Kapselung eines beliebigen offenen Längenmesssystems (universelle Anwendbarkeit). Dabei sind keine Änderung des Montageablaufs oder Montageverfahrens des offenen Längenmesssystems bzw. keine Umkonstruktion (z. B. Sonderkabelbaugruppe) desselben nötig. Durch den vereinfachten Aufbau der Positionsmesseinrichtung ergeben sich geringe Systemkosten. Es wird eine Demontage des Gehäuses der Positionsmesseinrichtung (z. B. für eine Reinigung) ohne eine Dejustage derselben ermöglicht.

Die Erfindung ermöglicht eine besonders hochauflösende Positionsmessung, wenn die Messteilung optisch abtastbar ausgebildet ist. Die Messteilung kann alternativ auch magnetisch, induktiv oder kapazitiv abtastbar ausgebildet sein.

## Patentansprüche

1. Mitnehmer (16) für eine Positionsmesseinrichtung,
wobei der Mitnehmer (16) dazu ausgebildet ist, eine Abtasteinheit (14) der Positionsmesseinrichtung zu tragen,
wobei der Mitnehmer (16) eine Öffnung (17) zur Aufnahme und Hindurchführung eines Kabels (14.1) der Abtasteinheit (14) hat, wobei sich die Öffnung (17) durch zumindest einen Teil des Mitnehmers (16) hindurch erstreckt,
**dadurch gekennzeichnet, dass** der Mitnehmer (16) eine in einem Längsabschnitt (L) des Mitnehmers (16) vorgesehene Aussparung (16.4') zum seitlichen Einlegen des Kabels (14.1) in den Mitnehmer (16) hat, dass der Mitnehmer (16) ein mit der Aussparung (16.4') korrespondierendes Verschlusselement (16.4) aufweist, dass das Verschlusselement (16.4) mit einem zum Verschlusselement (16.4) komplementären Teil (C) des Mitnehmers (16) lösbar verbunden ist, dass der Mitnehmer (16) eine erste Innenkontur (17.1) hat, dass das Verschlusselement (16.4) eine der ersten Innenkontur (17.1) gegenüberliegende zweite Innenkontur (17.2) hat, dass sich die erste Innenkontur (17.1) und die zweite Innenkontur (17.2) jeweils durch den Längsabschnitt (L) des Mitnehmers (16) hindurch erstrecken, und dass durch die erste Innenkontur (17.1) und die zweite Innenkontur (17.2) die Öffnung (17) zur Aufnahme und Hindurchführung des Kabels (14.1) gebildet wird.

2. Mitnehmer (16) nach Anspruch 1, wobei der Mitnehmer (16) ein schwertförmiges Mittelstück (16.2) aufweist, wobei der Mitnehmer (16) derart ausgebildet ist, dass das Kabel (14.1) in einer ersten Richtung (Z), die senkrecht zu einer Grundfläche (G) des Mitnehmers (16) verläuft, durch das schwertförmige Mittelstück (16.2) hindurch geführt werden kann.

3. Mitnehmer (16) nach Anspruch 2, wobei das schwertförmige Mittelstück (16.2) eine erste Ausdehnung (L1) in einer zweiten Richtung (Y), die senkrecht zu einer Längsausdehnung des Mitnehmers (16) und parallel zur Grundfläche (G) des Mitnehmers (16) verläuft, hat, wobei die erste Ausdehnung (L1) in einem Bereich vom 1,0-fachen bis zum 1,5-fachen oder im Bereich vom 1,0-fachen bis zum 1,25-fachen eines Durchmessers (D) des Kabels (14.1) liegt.

4. Mitnehmer (16) nach einem der vorhergehenden Ansprüche, wobei die Aussparung (16.4') einen die Öffnung (17) umfassenden ersten Teilabschnitt (20.1) und einen an den ersten Teilabschnitt (20.1) angrenzenden zweiten Teilabschnitt (20.2) aufweist, wobei durch den ersten Teilabschnitt (20.1) und den zweiten Teilabschnitt (20.2) ein in einer Draufsicht auf den Mitnehmer (16) L-förmig ausgebildeter Abschnitt (20) gebildet wird, wobei sich der erste Teilabschnitt (20.1) in einer Längsrichtung (X), die parallel zu einer Längsausdehnung des Mitnehmers (16) verläuft, erstreckt, wobei sich der zweite Teilabschnitt (20.2) in einer zweiten Richtung (Y), die senkrecht zur Längsausdehnung des Mitnehmers (16) und parallel zu einer Grundfläche (G) des Mitnehmers (16) verläuft, erstreckt, wobei der erste Teilabschnitt (20.1) in einem Mittenbereich (Q) des Mitnehmers (16) angeordnet ist, wobei sich der zweite Teilabschnitt (20.2) von einer seitlichen Oberfläche (24) des Mitnehmers (16) bis zum Mittenbereich (Q) des Mitnehmers (16) erstreckt.

5. Mitnehmer (16) nach Anspruch 4, wobei der erste Teilabschnitt (20.1) eine zweite Ausdehnung (L2) in der zweiten Richtung (Y) hat, wobei der zweite Teilabschnitt (20.2) eine dritte Ausdehnung (L3) in der Längsrichtung (X) hat, wobei die zweite Ausdehnung (L2) und/oder die dritte Ausdehnung (L3) jeweils in einem Bereich vom 1,0-fachen bis zum 1,25-fachen oder im Bereich vom 1,0-fachen bis zum 1,15-fachen eines Durchmessers (D) des Kabels (14.1) liegen.

6. Mitnehmer (16) nach einem der vorhergehenden Ansprüche, wobei die durch die erste und zweite Innenkontur (17.1, 17.2) gebildete Öffnung (17) einen in einer Querschnittsebene (S1), die parallel zu einer Längsausdehnung des Mitnehmers (16) und senkrecht zu einer Grundfläche (G) des Mitnehmers (16) verläuft, bogenförmigen oder abgewinkelten Verlauf hat.

7. Mitnehmer (16) nach einem der vorhergehenden Ansprüche, wobei die Aussparung (16.4') derart ausgebildet ist, dass, wenn das Verschlusselement (16.4) vom komplementären Teil (C) gelöst ist, das Kabel (14.1) in einer zweiten Richtung (Y), die senkrecht zu einer Längsausdehnung des Mitnehmers (16) und parallel zu einer Grundfläche (G) des Mitnehmers (16) verläuft, in den Mitnehmer (16) eingelegt werden kann.

8. Mitnehmer (16) nach einem der vorhergehenden Ansprüche, wobei das Verschlusselement (16.4) dazu ausgebildet ist, im verbundenen Zustand eine Zugentlastung für das Kabel (14.1) zu bewirken.

9. Mitnehmer (16) nach einem der vorhergehenden Ansprüche, wobei der Mitnehmer (16) einen Montagebereich (16.1) zur Verbindung des Mitnehmers (16) mit einem zu messenden Objekt (2) hat, wobei der Mitnehmer (16) derart ausgebildet ist, dass das Kabel (14.1) in einer Längsrichtung (X), die parallel zu einer Längsausdehnung des Mitnehmers (16) verläuft, in einem Längsabschnitt (L) des Mitnehmers (16) durch den Montagebereich (16.1) hindurch geführt werden kann.

10. Mitnehmer (16) nach einem der vorhergehenden Ansprüche, wobei die Öffnung (17) einen runden, quadratischen oder rechteckigen Querschnitt hat.

11. Mitnehmer (16) nach einem der vorhergehenden Ansprüche, wobei die Öffnung (17) eine vierte Ausdehnung (L4) in einer Ebene (S2), die parallel zu einer Grundfläche (G) des Mitnehmers (16) verläuft, hat, wobei die vierte Ausdehnung (L4) in einem Bereich vom 1,0-fachen bis zum 1,25-fachen oder im Bereich vom 1,0-fachen bis zum 1,15-fachen eines Durchmessers (D) des Kabels (14.1) liegt.

12. Mitnehmer (16) nach Anspruch 11, wobei die vierte Ausdehnung (L4) in einem Bereich von 2 mm bis 20 mm oder im Bereich von 5 mm bis 15 mm liegt.

13. Positionsmesseinrichtung mit einem Mitnehmer (16) nach einem der vorhergehenden Ansprüche, wobei die Positionsmesseinrichtung eine gekapselte Längenmesseinrichtung mit einem einteiligen oder zweiteiligen Gehäuse ist.

## Claims

1. Driver (16) for a position measuring device,
wherein the driver (16) is designed to carry a scanning unit (14) of the position measuring device,
wherein the driver (16) has an opening (17) for the receiving and guiding through of a cable (14.1) of the scanning unit (14), wherein the opening (17) extends through at least part of the driver (16),
**characterized in that** the driver (16) has a cutout (16.4') provided in a longitudinal section (L) of the driver (16) for laterally placing the cable (14.1) into the driver (16), **in that** the driver (16) has a closure element (16.4) corresponding to the cutout (16.4'), **in that** the closure element (16.4) is releasably connected to a part (C) of the driver (16) that is complementary to the closure element (16.4), **in that** the driver (16) has a first inner contour (17.1), **in that** the closure element (16.4) has a second inner contour (17.2) opposite the first inner contour (17.1), **in that** the first inner contour (17.1) and the second inner contour (17.2) each extend through the longitudinal section (L) of the driver (16), and **in that** the opening (17) for the receiving and guiding through of the cable (14.1) is formed by the first inner contour (17.1) and the second inner contour (17.2).

2. Driver (16) according to Claim 1, wherein the driver (16) has a blade-shaped central piece (16.2), wherein the driver (16) is designed in such a manner that the cable (14.1) can be guided through the blade-shaped central piece (16.2) in a first direction (Z) which runs perpendicularly to a base area (G) of the driver (16).

3. Driver (16) according to Claim 2, wherein the blade-shaped central piece (16.2) has a first extent (L1) in a second direction (Y) which runs perpendicularly to a longitudinal extent of the driver (16) and parallel to the base area (G) of the driver (16), the first extent (L1) lying in a range from 1.0 to 1.5 times or in the range from 1.0 to 1.25 times a diameter (D) of the cable (14.1).

4. Driver (16) according to one of the preceding claims, wherein the cutout (16.4') has a first subsection (20.1) surrounding the opening (17) and a second subsection (20.2) adjacent to the first subsection (20.1), wherein a section (20) of L-shaped design in a top view of the driver (16) is formed by the first subsection (20.1) and the second subsection (20.2), wherein the first subsection (20.1) extends in a longitudinal direction (X) which runs parallel to a longitudinal extent of the driver (16), wherein the second subsection (20.2) extends in a second direction (Y) which runs perpendicularly to the longitudinal extent of the driver (16) and parallel to a base area (G) of the driver (16), wherein the first subsection (20.1) is arranged in a central region (Q) of the driver (16), wherein the second subsection (20.2) extends from a lateral surface (24) of the driver (16) to the central region (Q) of the driver (16).

5. Driver (16) according to Claim 4, wherein the first subsection (20.1) has a second extent (L2) in the second direction (Y), wherein the second subsection (20.2) has a third extent (L3) in the longitudinal direction (X), wherein the second extent (L2) and/or the third extent (L3) each lie in a range from 1.0 to 1.25 times or in the range from 1.0 to 1.15 times a diameter (D) of the cable (14.1).

6. Driver (16) according to one of the preceding claims, wherein the opening (17) formed by the first and second inner contours (17.1, 17.2) has an arcuate or angled profile in a cross-sectional plane (S1) which runs parallel to a longitudinal extent of the driver (16) and perpendicularly to a base area (G) of the driver (16).

7. Driver (16) according to one of the preceding claims, wherein the cutout (16.4') is designed in such a manner that, when the closure element (16.4) is released from the complementary part (C), the cable (14.1) can be placed into the driver (16) in a second direction (Y) which runs perpendicularly to a longitudinal extent of the driver (16) and parallel to a base area (G) of the driver (16).

8. Driver (16) according to one of the preceding claims, wherein the closure element (16.4) is designed to relieve tension on the cable (14.1) in the connected state.

9. Driver (16) according to one of the preceding claims, wherein the driver (16) has a mounting region (16.1) for connecting the driver (16) to an object (2) to be measured, wherein the driver (16) is designed in such a manner that the cable (14.1) can be guided through the mounting region (16.1) in a longitudinal section (L) of the driver (16) in a longitudinal direction (X) which runs parallel to a longitudinal extent of the driver (16).

10. Driver (16) according to one of the preceding claims, wherein the opening (17) has a round, square or rectangular cross section.

11. Driver (16) according to one of the preceding claims, wherein the opening (17) has a fourth extent (L4) in a plane (S2) which runs parallel to a base area (G) of the driver (16), wherein the fourth extent (L4) lies in a range from 1.0 to 1.25 times or in the range from 1.0 to 1.15 times a diameter (D) of the cable (14.1).

12. Driver (16) according to Claim 11, wherein the fourth extent (L4) lies in a range from 2 mm to 20 mm or in the range from 5 mm to 15 mm.

13. Position measuring device with a driver (16) according to one of the preceding claims, wherein the position measuring device is an encapsulated length measuring device with a single-part or two-part housing.

## Revendications

1. Dispositif entraîneur (16) pour un dispositif de mesure de la position,
le dispositif entraîneur (16) étant réalisé pour supporter une unité de balayage (14) du dispositif de mesure de la position,
le dispositif entraîneur (16) ayant une ouverture (17) servant à la réception et au guidage à travers celle-ci d'un câble (14.1) de l'unité de balayage (14), l'ouverture (17) s'étendant à travers au moins une partie du dispositif entraîneur (16),
**caractérisé en ce que** le dispositif entraîneur (16) a un évidement (16.4') prévu dans une portion longitudinale (L) du dispositif entraîneur (16) pour l'insertion latérale du câble (14.1) dans le dispositif entraîneur (16), **en ce que** le dispositif entraîneur (16) présente un élément de fermeture (16.4) correspondant à l'évidement (16.4'), **en ce que** l'élément de fermeture (16.4) est relié de manière détachable à une partie (C) du dispositif entraîneur (16) qui est complémentaire à l'élément de fermeture (16.4), **en ce que** le dispositif entraîneur (16) a un premier contour intérieur (17.1), **en ce que** l'élément de fermeture (16.4) a un deuxième contour intérieur (17.2) opposé au premier contour intérieur (17.1), **en ce que** le premier contour intérieur (17.1) et le deuxième contour intérieur (17.2) s'étendent respectivement à travers la portion longitudinale (L) du dispositif entraîneur (16), et **en ce que** l'ouverture (17) servant à la réception et au guidage à travers celle-ci du câble (14.1) est formée par le premier contour intérieur (17.1) et le deuxième contour intérieur (17.2).

2. Dispositif entraîneur (16) selon la revendication 1, le dispositif entraîneur (16) présentant une pièce centrale (16.2) en forme d'épée, le dispositif entraîneur (16) étant réalisé de telle sorte que le câble (14.1) peut être guidé à travers la pièce centrale (16.2) en forme d'épée dans une première direction (Z) qui s'étend perpendiculairement à une surface de base (G) du dispositif entraîneur (16).

3. Dispositif entraîneur (16) selon la revendication 2, la pièce centrale (16.2) en forme d'épée ayant une première étendue (L1) dans une deuxième direction (Y) qui s'étend perpendiculairement à une étendue longitudinale du dispositif entraîneur (16) et parallèlement à la surface de base (G) du dispositif entraîneur (16), la première étendue (L1) se situant dans une plage de 1,0 fois à 1,5 fois ou dans la plage de 1,0 fois à 1,25 fois un diamètre (D) du câble (14.1).

4. Dispositif entraîneur (16) selon l'une des revendications précédentes, l'évidement (16.4') présentant une première portion partielle (20.1) entourant l'ouverture (17) et une deuxième portion partielle (20.2) adjacente à la première portion partielle (20.1), une portion (20) réalisée en forme de L en vue de dessus du dispositif entraîneur (16) étant formée par la première portion partielle (20.1) et la deuxième portion partielle (20.2), la première portion partielle (20.1) s'étendant dans une direction longitudinale (X) qui s'étend parallèlement à une étendue longitudinale du dispositif entraîneur (16), la deuxième portion partielle (20.2) s'étendant dans une deuxième direction (Y) qui s'étend perpendiculairement à l'étendue longitudinale du dispositif entraîneur (16) et parallèlement à une surface de base (G) du dispositif entraîneur (16), la première portion partielle (20.1) étant disposée dans une région centrale (Q) du dispositif entraîneur (16), la deuxième portion partielle (20.2) s'étendant à partir d'une surface latérale (24) du dispositif entraîneur (16) jusqu'à la région centrale (Q) du dispositif entraîneur (16).

5. Dispositif entraîneur (16) selon la revendication 4, la première portion partielle (20.1) ayant une deuxième étendue (L2) dans la deuxième direction (Y), la deuxième portion partielle (20.2) ayant une troisième étendue (L3) dans la direction longitudinale (X), la deuxième étendue (L2) et/ou la troisième étendue (L3) se situant respectivement dans une plage de 1,0 fois à 1,25 fois ou dans la plage de 1,0 fois à 1,15 fois un diamètre (D) du câble (14.1).

6. Dispositif entraîneur (16) selon l'une des revendications précédentes, l'ouverture (17) formée par le premier et le deuxième contour intérieur (17.1, 17.2) ayant une allure arquée ou coudée dans un plan de section transversale (S1) qui s'étend parallèlement à une étendue longitudinale du dispositif entraîneur (16) et perpendiculairement à une surface de base (G) du dispositif entraîneur (16).

7. Dispositif entraîneur (16) selon l'une des revendications précédentes, l'évidement (16.4') étant réalisé de telle sorte que, lorsque l'élément de fermeture (16.4) est détaché de la partie complémentaire (C), le câble (14.1) peut être inséré dans le dispositif entraîneur (16) dans une deuxième direction (Y) qui s'étend perpendiculairement à une étendue longitudinale du dispositif entraîneur (16) et parallèlement à une surface de base (G) du dispositif entraîneur (16).

8. Dispositif entraîneur (16) selon l'une des revendications précédentes, l'élément de fermeture (16.4) étant réalisé pour provoquer, dans l'état relié, une décharge de traction pour le câble (14.1).

9. Dispositif entraîneur (16) selon l'une des revendications précédentes, le dispositif entraîneur (16) ayant une région de montage (16.1) servant à la liaison du dispositif entraîneur (16) à un objet (2) à mesurer, le dispositif entraîneur (16) étant réalisé de telle sorte que le câble (14.1) peut être guidé à travers la région de montage (16.1) dans une portion longitudinale (L) du dispositif entraîneur (16) dans une direction longitudinale (X) qui s'étend parallèlement à une étendue longitudinale du dispositif entraîneur (16).

10. Dispositif entraîneur (16) selon l'une des revendications précédentes, l'ouverture (17) ayant une section transversale circulaire, carrée ou rectangulaire.

11. Dispositif entraîneur (16) selon l'une des revendications précédentes, l'ouverture (17) ayant une quatrième étendue (L4) dans un plan (S2) qui s'étend parallèlement à une surface de base (G) du dispositif entraîneur (16), la quatrième étendue (L4) se situant dans une plage de 1,0 fois à 1,25 fois ou dans la plage de 1,0 fois à 1,15 fois un diamètre (D) du câble (14.1).

12. Dispositif entraîneur (16) selon la revendication 11, la quatrième étendue (L4) se situant dans une plage de 2 mm à 20 mm ou dans la plage de 5 mm à 15 mm.

13. Dispositif de mesure de la position comportant un dispositif entraîneur (16) selon l'une des revendications précédentes, le dispositif de mesure de la position étant un dispositif de mesure de longueur encapsulé comportant un boîtier en une partie ou en deux parties.
